# EUROPEAN PATENT APPLICATION

(11) **EP 2 098 561 A2**
(43) Date of publication of application: **09.09.2009**
(21) Application number: 09250615.3
(22) Date of filing: 04.03.2009
(51) Int. Cl.: C08J 5/24, E21B 33/134

(54) **Composite material formulation**

(30) Priority: 05.03.2008 US 34039 P
(71) Applicant: WEATHERFORD/LAMB, INC., Houston Texas 77027 (US)
(72) Inventor: Molina, Sara, Big Springs, Texas 79720 (US)
(74) Representative: Shanks, Andrew

(57) **Abstract**

A system according to the present invention may be comprised of an epoxy resin, hardener and catalyst. One particular preferred system ratio is 1:1.64:0.005, respectively. The epoxy resin may be a tetrafunctional resin. The hardner may be a nadic methyl anhydride. One particularly preferred heat activated catalyst is 1-(2-hydroxypropyl) imidazole available from the Lindau Company under the brand name LINDAX 1. The amount of catalyst may be tailored to a certain desired pot life, oven cure and to promote polymer crosslinking at a faster rate. The system is particularly advantageous in the fabrication of composite bridge plugs.

## Description

### BACKGROUND OF THE INVENTION

### 1. Field of the Invention.

This invention relates to composite materials. More particularly it relates to fiber-reinforced epoxy resins.

Curable resinous compositions are described in international application WO 2006/052253 published under the Patent Cooperation Treaty. The curable composition described in that patent publication may be hardened in the presence of a heat activated catalyst to render a scratch resistant hard surface.

Organometallic compositions and coating compositions are described in international application WO 2006/022899 published under the Patent Cooperation Treaty. Certain catalysts described therein include organometallic compositions according to the formula Metal(Amidine)₂(Carboxylate)ₓ where x is the oxidation state of the metal. Examples include Zn(Undax-1)₂(acetate)₂, Zn(Lindax-1)₂(formate)₂ and Zn(Lindax-1)₂(2-ethylhexanoate)₂ where Lindax-1 supplied by Lindau Chemicals Inc. Is 1-(2-hydroxypropyl)imidazole.

### BRIEF SUMMARY OF THE INVENTION

The system according to the present invention may be comprised of an epoxy resin, hardener and catalyst. One particular preferred system ratio Is 1:1.64:0.005, respectively. The epoxy resin may be a tetrafunctional resin. The hardener may be a nadic methyl anhydride. One particularly preferred heat activated catalyst is 1-(2-hydroxypropyl) imidazole available from the Lindau Company under the brand name LINDAX 1. The amount of catalyst may be tailored to a certain desired pot life, oven cure and to promote polymer crosslinking at a faster rate.

### BRIEF DESCRIPTION OF THE SEVERAL VIEWS OF THE DRAWING(S):

Figure 1 is a differential scanning calorimeter (DSC) plot for a sample having a cure schedule of 11 hours at 140°F, 2 hours at 302°F and 5 hours at 425°F.

Figure 2 is a differential scanning calorimeter (DSC) plot for a sample having a cure schedule of 13 hours at 140°F, 2 hours at 302°F and 5 hours at 425°F.

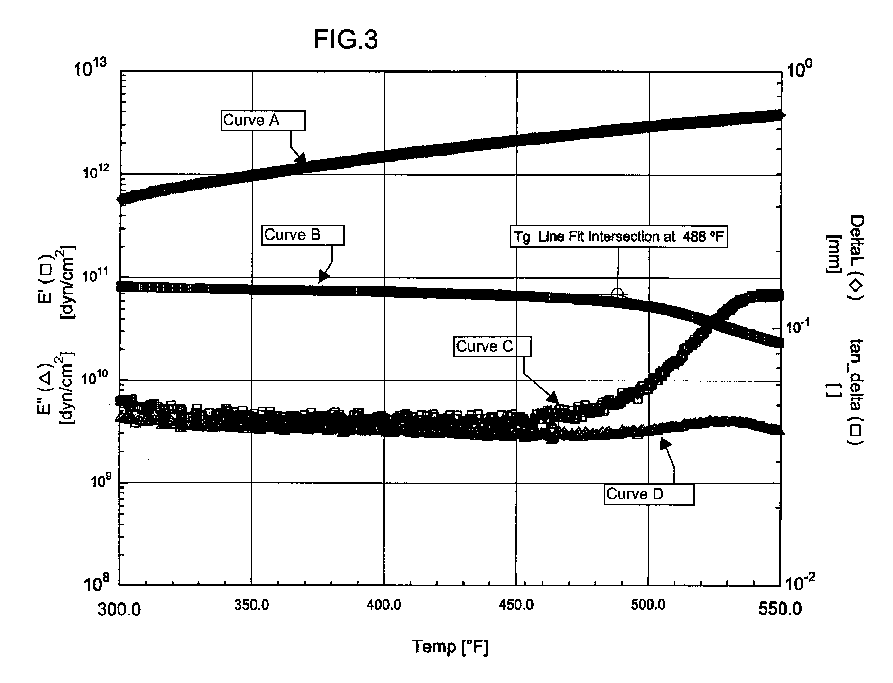

Figure 3 is a differential thermo-mechanical analyzer plot of a sample prepared using a final cure period temperature of 425°F.

Figure 4 is a differential scanning calorimeter plot for a sample cured at a final temperature of 425°F.

Figure 5 is a differential scanning calorimeter plot for a sample cured at a final temperature of 450°F.

Figure 6 is a differential scanning calorimeter plot for a sample cured at a final temperature of 475°F.

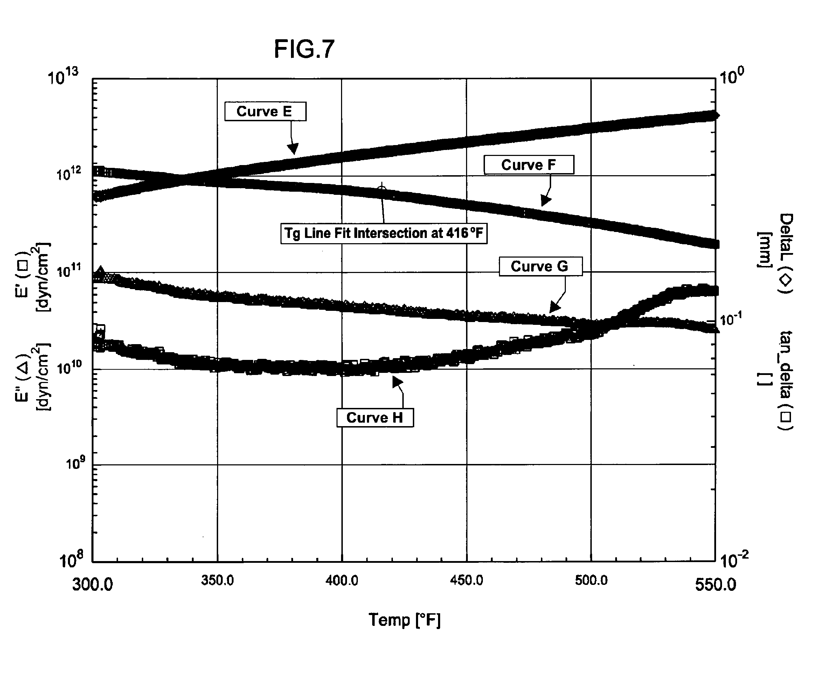

Figure 7 is a differential thermo-mechanical analyzer plot of a sample prepared using a final cure period temperature of 325°F.

Figure 8 is a thermo gravimetric analyzer plot for material impregnated with resin and pulled through an orifice having a diameter of 0.054 inch.

Figure 9 is a thermo gravimetric analyzer plot for material impregnated with resin and pulled through an orifice having a diameter of 0.064 inch.

### DETAILED DESCRIPTION OF THE INVENTION

A composite is a mixture or mechanical combination on a macro scale of two or more materials that are solid in the finished state, are mutually insoluble, and differ in chemical nature. One major type of composite material is reinforced plastics, principally comprised of glass fiber and a thermosetting resin. Other types of fibers such as carbon, boron, aluminum silicate, and silicon carbide may be used.

A composite system according to the present invention may be comprised of an epoxy resin, hardener and catalyst. One particular preferred system ratio is 1:1.64:0.005 respectively. The epoxy resin may be a tetrafunctional resin. The hardener may be a nadic methyl anhydride. One particularly preferred heat activated catalyst is 1-(2-hydroxypropyl) imidazole available from the Lindau Company under the brand name LINDAX 1.

The amount of catalyst may be tailored to the desired pot life, oven cure and to promote polymer crosslinking at a faster rate. In a preferred embodiment, fiberglass rovings are impregnated with this resin system as the filament winding process takes place. During filament winding, the pot containing the resin mixture is preferably maintained at a temperature of about 110°F to promote the flow of the system to better impregnate the fiberglass strands. Once the winding process is complete and the tubing has been fabricated, the system is cured at 140°F for 12 hours, 302°F for 2 hours and 425°F for 5 hours.
The process is then substantially complete.

One aspect of this new solution which differentiates it from prior solutions is the catalyst. Epoxy resin systems are usually two part systems, additives may be incorporated into the system to give the epoxy one or more special characteristics. In this system, the catalyst and the amount are critical. The catalyst in this case provides a faster cure, promoting a higher amount of crosslinking thereby enabling the product to have a higher glass transition temperature allowing it to be exposed to extreme environments where high temperatures and pressures are involved.

Another aspect is the processing and the cure schedule. Filament winding with a tetrafunctional epoxy resin is unique in itself due to the epoxy's viscosity.

Table 1, below, shows the onset glass transition temperature (T_{g}) for various tested systems as determined by thermomechanical analysis using an expansion probe. The sample thickness is also shown in the table. The weight percent catalyst for Sample Nos. 3, 4 and 5 were 0.1, 1.0 and 0.5, respectively. Sample Nos. 1 and 2 represent resin/hardener systems of the prior art. Sample No. 5 represents the currently preferred system.

**TABLE 1**

| Sample ID | CY179/L25 | L290/25 | 721/25/0.1 | 721/25/1.0 | 721/25/0.5 |
|---|---|---|---|---|---|
| Sample No. | 1 | 2 | 3 | 4 | 5 |
| Thickness | 3.77mm | 1.40mm | 2.77mm | 2.04mm | 3.03mm |
| Onset Temp | 218.0°C | 223.0°C | 204.0°C | 223.4°C | 295.0°C |

Table 2, below, shows the transition temperatures of various resin/hardener systems without a catalyst. MY721/A5200 is a resin/hardener system from Huntsman Corporation (Basel, Switzerland) that utilizes an amine-based hardener. MY721/A917 is another resin/hardener system from Huntsman Corporation that utilizes an amine-based hardener. "Pure G-14" is an epoxy resin system of the prior art that has an anhydride-based hardener. "Blend G-13" is a bis A epoxy system having a cyclo aliphatic hardener.

**TABLE 2**

| Resin/Hardener (ratio) | Transition 1 °C (°F) | Transition 2 °C (°F) | Observation |
|---|---|---|---|
| Lindoxy 190/Lindride 25 (1:1.25) | 192.6 (378.7) | | Transition 1 is strong so it can be considered the T_{g} |
| Lindoxy 290/Lindride 25 (1:1) | 219.5 (427.1) | | Transition 1 is strong so it can be considered the T_{g}. Other transitions too small to take into account. |
| MY721/A5200 (1:0.40) | 204.3 (399.7) | | Transition 1 is strong so it can be considered the T_{g}. Unlike10/30 samples, only one clear transition observed. |
| MY721/A917 (1:1.41) | 217.2 (423.0) | | Unlike 10/30 sample, sample showed lower amount of un-cured material on only one clear transition. |
| MY721/Lindride 25 (1:1.64) | 220.8 (429.4) | | Shows a unique transition and almost 20°F higher as compared to sample with only 0.4 ratio of Lindride 25 |
| Pure G-14 | 217.1 (422.8) | | Transition 1 is strong so it can be considered the T_{g} |
| Blend G-13 | 216.4 (421.5) | | Transition 1 is strong so it can be considered the T_{g} |

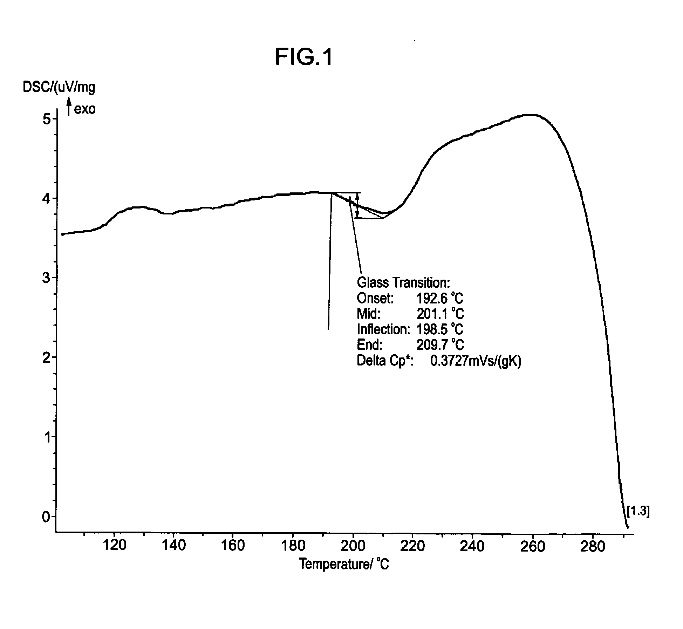

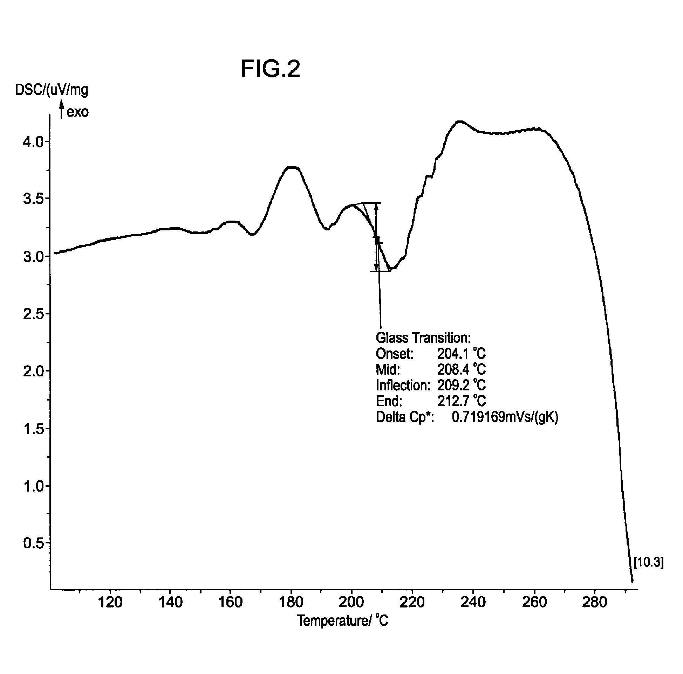

Samples having differing initial cure times are compared in Figures 1 and 2. The sample of Figure 1 had a cure schedule of 11 hours at 140°F, 2 hours at 302°F and 5 hours at 425°F. The sample of Figure 2 had a cure schedule of 13 hours at 140°F, 2 hours at 302°F and 5 hours at 425°F.

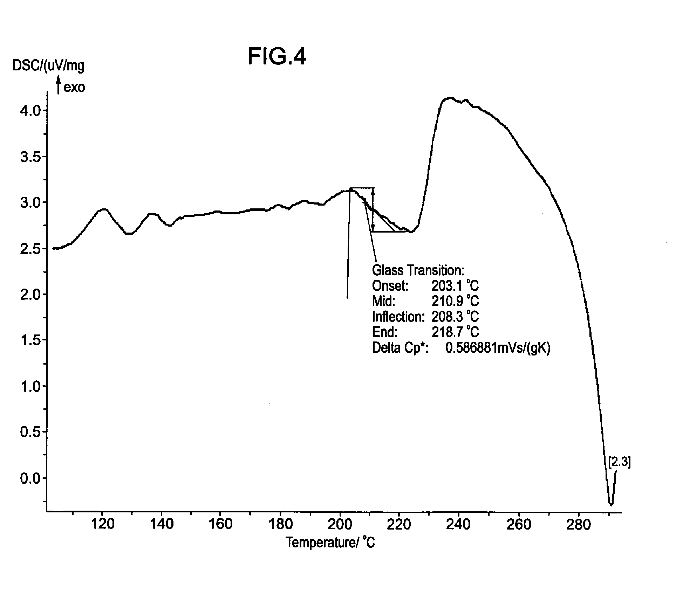

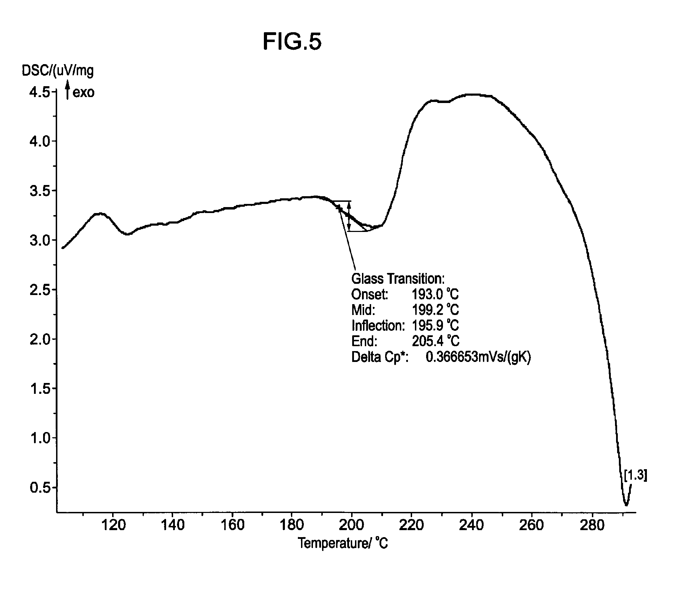

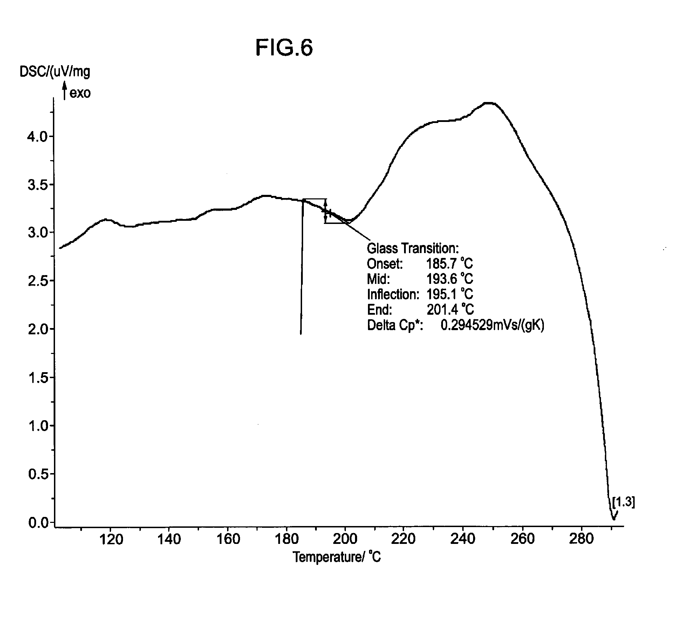

Samples having differing final cure temperatures are compared in Figures 4, 5 and 6. The sample of Figure was cured at a final temperature of 425°F. The sample of Figure 5 was cured at a final temperature of 450°F. The sample of Figure 6 was cured at a final temperature of 475°F.

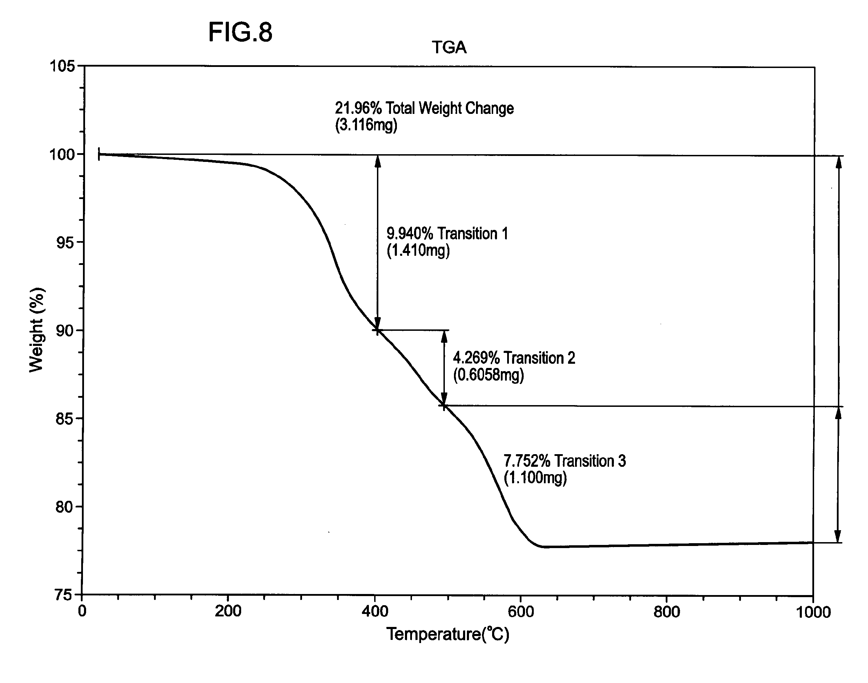

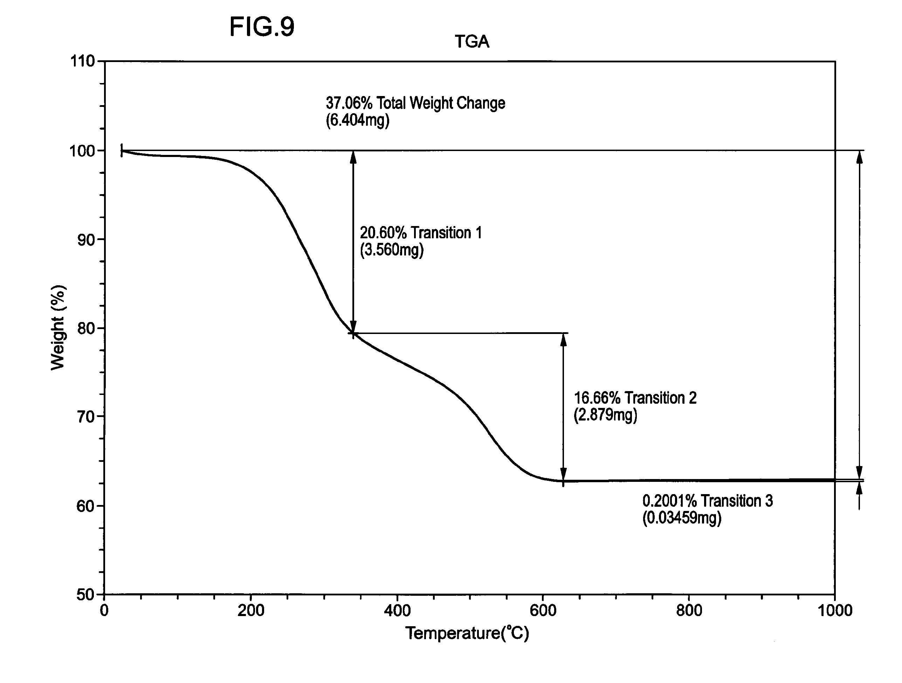

For one, particular preferred embodiment, a resin-impregnated fiber will have between about 30% and about 35% resin, by weight, in the "wet" condition - i.e., prior to curing. Figure 8 is a thermo gravimetric analyzer plot for material impregnated with resin and pulled through an orifice having a diameter of 0.054 inch. Figure 9 is a thermo gravimetric analyzer plot for material impregnated with resin and pulled through an orifice having a diameter of 0.064 inch. It can be seen that the 0.064 inch diameter orifice (or "nib") comes closer to producing material in the desired range of about 30 to 35% resin.

Although the invention has been described in detail with reference to certain preferred embodiments, variations and modifications exist within the scope and spirit of the invention as described and defined in the following claims.

## Claims

1. A composite article prepared by the process comprising the steps of:
coating a fiber with a mixture comprising one part tetrafunctional epoxy resin, about 1.64 parts nadic methyl anhydride hardener and about 0.005 part 1-(2-hydroxypropyl) imidazole catalyst; and
curing the coated fiber at about 140°F for about 12 hours, followed by curing at about 302°F for about 2 hours, followed by curing at about 425°F for about 5 hours.

2. A composite article as recited in claim 1 wherein the fiber is a glass fiber.

3. A composite article as recited in claim 1 wherein the fiber is a carbon fiber.

4. A composite article as recited in claim 1 wherein the fiber is an synthetic polymer fiber.

5. A composite article as recited in claim 1 wherein the fiber is an aramid fiber.

6. A composite article prepared by the process comprising the steps of:
impregnating a fiber roving with a mixture comprising one part tetrafunctional epoxy resin, about 1.64 parts nadic methyl anhydride hardener and about 0.005 part 1-(2-hydroxypropyl) imidazole catalyst;
forming the impregnated roving into a selected shape; and
curing the formed, impregnated roving at about 140°F for about 12 hours, followed by curing at about 302°F for about 2 hours, followed by curing at about 425°F for about 5 hours.

7. A composite article as recited in claim 6 wherein the fiber is a glass fiber.

8. A composite article as recited in claim 6 wherein the fiber is a carbon fiber.

9. A composite article as recited in claim 6 wherein the fiber is an synthetic polymer fiber.

10. A composite article as recited in claim 6 wherein the fiber is an aramid fiber.

11. A composite article as recited in any of claims 6 to 10 wherein the step of forming comprises molding.

12. A composite article as recited in any of claims 6 to 11wherein the step of forming comprises winding.

13. A composite article as recited in any of claims 6 to 12 wherein the step of forming comprises layering.

14. A composite bridge plug prepared by the process comprising the steps of:
impregnating a fiberglass roving with a mixture comprising one part tetrafunctional epoxy resin, about 1.64 parts nadic methyl anhydride hardener and about 0.005 part 1-(2-hydroxypropyl) imidazole catalyst;
winding the impregnated roving into a generally cylindrical shape; and
curing the wound, impregnated roving at about 140°F for about 12 hours, followed by curing at about 302°F for about 2 hours, followed by curing at about 425°F for about 5 hours.
